# EUROPEAN PATENT APPLICATION

(11) **EP 4 471 108 A1**
(43) Date of publication of application: **04.12.2024**
(21) Application number: 23176477.0
(22) Date of filing: 31.05.2023
(51) Int. Cl.: C10G 1/10, C10G 9/28, C08J 11/12, C10B 49/22, C10B 53/07, C10G 9/30, C10G 1/08, C10G 1/00, C10B 49/18

(54) **PLANT AND METHOD FOR CONVERTING MELTED PLASTICS INTO PETROCHEMICAL PRODUCTS**

(71) Applicant: Pruvia GmbH, 90513 Zirndorf (DE)
(72) Inventor: MASTELLONE, Maria Laura, 81110 Caserta (IT)
(74) Representative: Tergau & Walkenhorst Intellectual Property GmbH

(57) **Abstract**

A plant for converting plastics into petrochemical products, comprising a cracking reactor (R1) for a pyrolysis reaction, wherein the plastics is converted into at least gasified pyrolysis products and solid pyrolysis products, and further comprising a separate combustion reactor (R2),
the cracking reactor (R1) comprising an upright standing reactor vessel (10) with a bottom section (S1), a middle section (S2), and an upper section (S3), the reactor vessel (10) further comprising a plastic melt flow inlet (1), a particles flow inlet (3), a gaseous pyrolysis products outlet (4) discharging from the upper section (S3), and a particles and solid pyrolysis products outlet (9) discharging from the bottom section (S1),
the combustion reactor (R2) comprising a particles and solid pyrolysis products inlet (R2-a), an oxidant inlet (R2-b), and a particles and combustion products outlet (R2-c),
the particles and solid pyrolysis products outlet (9) of the cracking reactor (R1) being connected via a first connection line to the particles and solid pyrolysis products inlet (R2-a) of the combustion reactor (R2), and the particles and combustion products outlet (R2-c) of the combustion reactor (R2) being connected via a second connection line to the particles flow inlet (3) of the cracking reactor (R1),
such that the cracking reactor (R1) and the combustion reactor (R2) are part of a particles loop which contains a multitude of solid particles, wherein during operation the particles are cycled from the cracking reactor (R1) to the combustion reactor (R2) and back,
characterized in that the plastic melt flow inlet (1) is arranged in the upper section (S3) of the cracking reactor (R1), designed to inject a plastic melt flow predominantly in top-to-bottom direction.

## Description

### TECHNICAL FIELD

The invention relates to a plant for converting plastics into petrochemical products. It also relates to a corresponding method of operation.

### BACKGROUND ART

WO 2020/212403 A1, on which the preamble of claim 1 is based, discloses a so-called plastic-to-oil plant for converting plastics into petrochemical products which is based on a concept of twin or tandem reactors - cracking reactor and combustion reactor - connected to each other via a loop of inert particles. The cracking reactor has a reactor vessel with multiple zones or sections. During operation, a plastic melt flow is injected with high pressure (preferably at least 50 bar) from an annular chamber within the bottom section into the middle section in an upward direction, while a flow of particles enters the reactor vessel in a downward direction, i.e. basically counter-currently to the plastic melt flow. The high-pressure injection of the plastic melt flow is technically somewhat demanding in terms of construction, operation, and maintenance. Furthermore, the reaction dynamics and their control could be improved.

### DISCLOSURE OF THE INVENTION

Therefore, an objective of the invention is to provide an easy-to-build, operate and maintain plant for converting plastics into petrochemical products of the kind specified above which achieves an even better and more efficient conversion of plastics into petrochemical feedstock with as little energy input and environmentally harmful residues as possible and to allow for the handling of different plastic sources. Furthermore, a beneficial method of operation shall be provided.

Regarding the plant, in order to solve the problem claim 1 suggests:
A plant for converting plastics into petrochemical products, comprising a cracking reactor for a pyrolysis reaction, wherein the plastics is converted into at least gasified pyrolysis products and solid pyrolysis products, and further comprising a separate combustion reactor,
the cracking reactor comprising an upright standing reactor vessel with a bottom section, a middle section, and an upper section with a top, the reactor vessel further comprising a plastic melt flow inlet, a particles flow inlet, a gaseous pyrolysis products outlet discharging from the upper section, and a particles and solid pyrolysis products outlet discharging from the bottom section,
the combustion reactor comprising a particles and solid pyrolysis products inlet, an oxidant inlet, and a particles and combustion products outlet,
the particles and solid pyrolysis products outlet of the cracking reactor being connected via a first connection line to the particles and solid pyrolysis products inlet of the combustion reactor, and the particles and combustion products outlet of the combustion reactor being connected via a second connection line to the particles flow inlet of the cracking reactor,
such that the cracking reactor and the combustion reactor are part of a particles loop which contains a multitude of solid particles, wherein during operation the particles are cycled from the cracking reactor to the combustion reactor and back,
characterized in that the plastic melt flow inlet is arranged in the upper section of the cracking reactor, designed to inject a plastic melt flow predominantly in top-to-bottom direction.

This is in strict contrast to the teaching of WO 2020/212403 A1 where an injection of plastics in bottom-to-top direction was deemed necessary. Surprisingly, it has been found that efficient reaction dynamics can also be reached with a top-to-bottom injection of plastics, while at the same time the demands on the injection pressure may be lowered - which, among others, provides increased lifetime of sealings and enhanced safety.

In a preferred embodiment which allows for a simple construction, the plastic melt flow inlet is arranged at the top, in particular as a top lid, of the reactor vessel.

Preferably, within the plastic melt flow inlet or below in the reactor vessel there is a plastic melt flow distributor, designed to uniformly distribute the injected plastic melt flow with respect to a cross section of the reactor vessel. There may be some distance between the plastic melt flow inlet and the distributor, but preferably the distributor is placed above the particles flow inlet and the gaseous pyrolysis products outlet. This promotes excellent, homogeneous reaction dynamics over the entire cross section.

The particles flow inlet is preferably arranged in the upper section of the cracking reactor, designed to inject a particles flow predominantly in top-to-bottom direction, i.e., in the same direction as the plastic melt flow.

In particular, the particles flow inlet may be arranged in a side wall of the reactor vessel, below the plastic melt flow inlet.

In case of large-section reactor, the particles flow inlet may be arranged throughout one or more standpipes co-concurrently with the plastic melt flow inlet.

The gaseous pyrolysis products outlet is preferably arranged in a side wall of the reactor vessel, below the plastic melt flow inlet and preferably below the particles flow inlet.

In an advantageous embodiment the first connection line comprises a non-mechanical valve which is designed to control a flow of particles and solid pyrolysis products from the cracking reactor to the combustion reactor via an adjustable flow of gas. Preferably, the arrangement is such that no mechanical parts like screw feeders or pumps are required for transporting the particles and solid pyrolysis products from the cracking reactor to the combustion reactor.

The second connection line preferably comprises, in that order along the flow direction of the particles, a gas/particles transportation riser, a gas-particles separator ejecting flue gas from the particles loop, a particles buffer, and a non-mechanical valve.

The transportation riser conveys the stream of gas and particles from the combustion reactor to a gas-particle separator that ejects the flue gas from the loop such that ideally only particles are addressed to a buffer. The particles buffer allows for a regulation or control of the particles flow into the cracking reactor by buffering temporary excess supply at the buffer's entry side.

The non-mechanical valve in the second connection line, after the particles buffer, is preferably designed to control a flow of particles into the cacking reactor via an adjustable flow of aeration gas.

The particles buffer preferably comprises a fluidized bed heat exchanger, designed for controllable cooling and heating of buffered particles via an adjustable flow of fluidization gas that can be prior cooled or heated.

The transportation riser of the combustion reactor preferably comprises a column which is arranged above the combustion reactor. Preferably, the transportation riser is spatially separated from the combustion zone in the combustion reactor. This separation allows for a better control of the residence time of particles within the combustion zone. However, in may also be possible to combine the combustion reactor and the transportation riser in a single column.

In a preferred embodiment the plant comprises an oxidant line with an oxygen enrichment or production unit leading to the oxidant inlet, wherein the oxygen enrichment or production unit is designed to increase an oxygen level and/or to decrease a nitrogen level of drawn-in air. This has the following advantage: the use of pure oxygen or oxygen-enriched air as oxidant in the combustion reactor allow to reduce the size of the vessel and the riser of more than 75% in volume. Moreover, the absence of nitrogen will minimize and eventually reduce to zero the production of nitrous oxides so improving the environmental impact of the plant.

With respect to the method, the present disclosure suggests that a plastic melt flow is injected into the reactor vessel via the plastic melt flow inlet predominantly in top-to bottom direction.

Preferably, a flow of particles is injected into the reactor vessel via the particles flow inlet predominantly in top-to bottom direction, concurrently with the plastic melt flow.

Advantageously, a flow of gaseous pyrolysis products in bottom-to-top direction through the reactor vessel is established by a negative pressure applied to the gaseous pyrolysis products outlet, in particular via a fractionation system connected to said gaseous pyrolysis products outlet.

It is particularly preferred that a fluidized or moving bed of downwardly transported particles is maintained within the reactor vessel.

In a preferred mode of operation, the bed of particles within the reactor vessel is kept at an almost constant level by setting the average inflow rate of particles into and the outflow rate of particles from the reactor vessel at the same value. In particular, a target level for the bed of particles is set within the middle section of the reactor vessel, below the various inlets.

Preferably, the flow of molten plastic injected into the reactor vessel impinges on the bed of particles from above.

In yet a preferred embodiment, the inflow rate of particles into the reactor vessel is controlled by a non-mechanical valve, wherein in a preferred mode of operation a flow of aeration gas within the non-mechanical valve is used to strip air or oxygen entrapped in the particles flow. Preferably, also the outflow rate of particles from the reactor vessel is controlled by a non-mechanical valve.

For example, the circulated particles comprise or consist of quartz and/or silica and/or silicon carbide and/or ceramic coated spherule.

In a preferred mode of operation, the temperature of the particles leaving the combustion reactor is adjusted before entering the cracking reactor by guiding them through a heat exchanger. In particular, the heat exchanger may also act as a particles buffer.

Furthermore, the plastic melt flow is preferably heated to a temperature in the range from 320 to 400 °C before entering the plastic melt flow inlet and supplied to it with said temperature.

Last but not least, the plastic melt flow is preferably injected into the reactor vessel with a pressure in the range of 1 - 20 bar which on the one hand is enough to overcome the typical operating pressure within the reactor vessel in the range of 30-50 mbar, but on the other hand is far less than required in the prior art plant according to WO 2020/212403 A1.

In summary, main differences of the plant according to the invention and the prior art plant according to WO 2020/212403 A1 comprise:
- Plastics are fed by the top of the cracking reactor in order to avoid a large back-pressure on the extruder used for melting the plastics input (providing increased lifetime of sealings and enhanced safety and reduce electricity consumption).
- Particles and char are retrieved from the bottom of the cracking reactor by using a non-mechanical valve instead of a screw feeder to avoid mechanical parts inside the high-temperature zone (reduced maintenance) and avoid any risk of leakage of flammable gas (enhanced safety).
- Regeneration of particles in the combustion reactor occurs in a bubbling fluidized bed that is separated by the transportation column so that the residence time can be better controlled (enhanced efficiency of reaction).
- Addition of a buffer in the particles loop to control the particles temperature before the reintroduction to the cracking reactor and to control the pressure balance of the whole loop (enhanced flexibility and safety).
- Possibility to use a stream of enriched air with low nitrogen content or a pure oxygen stream in the combustion reactor in place of air which allows to reduce the vessel and pipelines size, minimize the nitrogen oxides, and allows to add a module for carbon dioxide removal and strongly minimization of flue gases to atmosphere (increasing of decarbonization index).

### BRIEF DESCRIPTION OF THE DRAWINGS

In the following, exemplary embodiments of the invention are described with reference to the accompanying drawings.
FIG. 1 shows, by means of a block diagram, a representation of the overall process of feedstock production from plastics in a corresponding plant.
FIG. 2 shows a sketch of a cracking reactor used in the process from FIG. 1, with indication of main parts.

### DETAILED DESCRIPTION OF PREFERRED EMBODIMENTS

The process aim of a process in a so-called plastic-to-oil (PtO or P2O) or plastic-to-feedstock plant is to convert several kinds of plastic material into feedstock for chemical and petrochemical industry. Basically, all kinds of (meltable) thermoplastic polymers, resins and natural or synthetic polymers can be fed to the system for chemicals recovery.

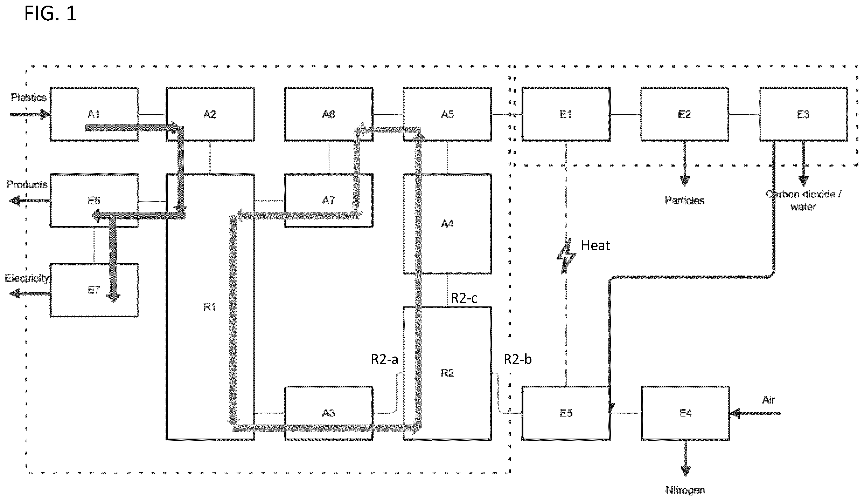

FIG. 1 represents the overall block diagram of the system or plant that is described in the following.

The core of the system is the "reaction loop" (indicated by a closed loop of arrows in the center of the figure), also known as "particles loop", that comprises: cracking reactor R1 where pyrolysis of fed plastics occurs in the presence of hot particles, non-mechanical valve A3 for flow control where the particles and char from cracking reactor R1 go to combustion reactor R2, combustion reactor or regenerator R2 where the char is oxidized and the particles are regenerated in the presence of supplied air or oxygen, gas/solid transportation riser A4 where particles and gas from the combustion reactor R2 are transported upwardly, gas-solid separator A5 for the separation of flue gas from the particles, fluidized-bed particles buffer A6 with stripping of remaining air or oxygen from the particles, non-mechanical valve A7 for controlled particles reintroduction into cracking reactor R1, thereby completing the particles loop.

### I. Description of the reaction loop

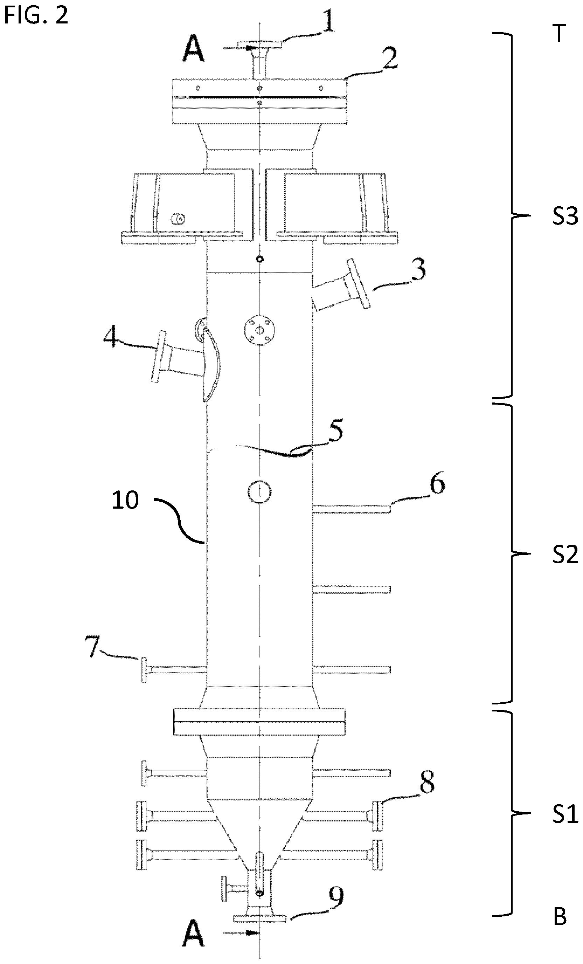

The plastic material is usually fed as a solid, shredded mixture into a plastic melting device A1, that is generally - but not limited to - an extruder, then to be melted and overheated at a preferred temperature between 320 and 400°C, depending on the plastic type. The overheating is preferably reached and maintained by using internal mechanical friction in combination with a number of externally heated pipes. This is generally archived by an additional heating device A2. However, said functionality may be integrated into the plastic melting device A1 as well. The molten flow of plastics is then fed at said temperature into the cracking reactor R1, described in detail in the next paragraph and sketched in FIG. 2, by means of one or more connecting pipes discharging into plastic melt flow inlet 1. Downstream of the plastic melt flow inlet 1 and preferably connected to it or integrated with it there is a plastic melt flow distributor 2, preferably constituted by a small plenum and a thick disk with a series of holes that induces a limited pressure drop; enough to allow a uniform distribution of the molten plastic flow over the reactor transversal section (cross section) under form of "shower-like" streamlines.

The cracking reactor R1 is a generally cylindrical, upright standing vessel, filled during operation by a bed of particles. The particles, in particular comprising or consisting of quartz and/or silica and/or ceramic coated spherule, are pre-heated at a given temperature in another part (R2+A4+A5+A6) of the loop and fed - using one or more non-mechanical valves A7 for flow control - from a particles flow inlet 3 within the vessel side wall and/or from the top of cracking reactor R1. The bed of particles is a moving bed: its level (indicated exemplarily by reference numeral 5) is fixed because the mass flow of particles coming into the cracking reactor R1 controlled by means of non-mechanical valve A7 and the mass flow of particles that exits from the reactor R1 controlled by means of non-mechanical valve A3 have the same mean value. Due to the distributor 2, the plastic flow is uniformly distributed over the bed of particles, and it is englobed by the particles flow that is fed in the cracking reactor R1 by non-mechanical valve A7 in the downward direction, i.e. from "top to bottom" direction of cracking reactor R1. The pyrolysis reaction occurs over and between the particles, thereby transforming the molten flow in a gaseous flow. The gaseous flow follows a "bottom to top" direction thanks to a slight negative pressure between the cracking reactor R1 and the fractionation section E6 (see below) connected to gaseous product outlet 4 in the vessel wall, preferably located in an upper region of the reactor. The gaseous products are responsible of a mild fluidization of the bed until they leave the bed itself and are then transported out from the reactor towards the fractionation section E6 and possibly further. The particles flow that leaves the cracking reactor R1 from the bottom of the vessel via particles and solid pyrolysis products outlet 9 and via non-mechanical valve A3 further downstream is mixed with unconverted matter, char and impurities present in the plastic flow. This particle-containing stream is sent to the combustion reactor R2 via particles and solid pyrolysis products inlet R2-a for regeneration, heating, and recycling back into the cracking reactor R1.

The non-mechanical valves A3 and A7 are a category of solid flow control devices employing no mechanically moving part; more precisely they are preferably L-valves having taps for injection of gas for particles transportation along the horizontal part of L-valve and contingency gas for creating a high-pressure point along the vertical part of the L-valve, when necessary. Accordingly, they can be easily adapted to high temperature conditions. An external gas injection is used to control the solid flow rate in these valves, eventually by using lances inside in case of long horizontal part of the L-valve. Vividly spoken, the aeration gas lubricates the solids passing through the valve, facilitating their smooth flow in a liquid-like behavior. In particular, flow through these valves can be stopped by shutting the supply of aeration gas. L-valve is one of the possible choices among different existing non-mechanical valves. Other possible choices are, for example, J-valve, V-valve, reverse seal valve, loop seal or seal pot.

### II. Description of the other sections

In the fractionation section E6 the gaseous products drawn from the cracking reactor R1 are cooled down and condensed into liquid products; the fractionation is realized to separate different mixtures of chemicals having the potential to be of interest for the market. The fractionation is preferably realized by using heat exchangers as partial condensers and cooling auxiliary circuits to promote the condensations of the desired fractions. The fractionation into wax, diesel, gasoline is the most common, but the system can separate less or more fractions of chemicals depending on their boiling temperatures easily.

The non-condensable part of the gaseous products is utilized as an LPG stream for electricity generation within electricity production unit E7. The electricity generator can be any commercially available system fed by LPG with or without heat recovery.

The particles flow retrieved from the reactor R1 by using the non-mechanical valve A3 is sent to the combustion reactor R2 where an oxidation reaction occurs at high temperature (preferably > 650°C). The oxidant can be air, oxygen-enriched air, or pure oxygen. In the latter two cases an oxygen enrichment or production unit E4 within the oxidant inlet line may be used, which basically removes nitrogen from drawn-in air. The oxidant stream is preferably pre-heated by oxidant heater E5, preferably arranged downstream from oxygen enrichment or production unit E4, at a temperature between 50 and 300°C before feeding via oxidant inlet R2-b into the combustion reactor R2. The oxidant heater is preferably realized as a recuperative heat exchanger heated by excess heat contained in the exhaust or flue gas flow from the combustion reactor R2 (see further below). The oxy-combustion of char and unconverted matter within the combustion reactor R2 generates heat that increases the enthalpy content of particles and flue gas. The flue gas contains mainly carbon dioxide, low fraction of steam, the excess oxygen not used to oxidize the char and the nitrogen that is normally present in the air in the measure of 79%v. The use of enriched air or pure oxygen reduces the presence of nitrogen to virtually zero, so allowing to reduce the volume of the vessels, the pipe sections and capex; from the environmental point of view the absence of nitrogen limits also the production of NOx virtually down to zero; moreover the limited amount of flue gas (that undergoes a reduction in volume larger than 70%) allows the carbon dioxide removal in a sustainable way. The heat production allows for the particles to be heated up to a temperature between 650 and 1000°C, depending on operating conditions.

The particles and the flue gas stream discharged from the particles and combustion products outlet R2-c of the combustion reactor R2 are transported by the equipment labelled A4, basically a pneumatic (gas/solid) transportation riser, into a gas-solid (i.e. gas-particle) separator A5 where the particles are recycled back in the loop and precisely to the particles buffer A6. The buffer preferably is or comprises a fluidized bed heat exchanger where the temperature of the particles is controlled and, in case it is too high, it is lowered by controlling the fluidizing gas (in particular air) flow and, therefore, the extracted heat. That is, the particles buffer A6 may act as a controllable cooler / heater for the particles flow. The particles flow at the desired temperature is then fed into the cracking reactor R1 by means of the non-mechanical valve A7. This valve preferably also provides the removal of air remaining entrapped between the particles interstices by using a flow of nitrogen for stripping it, so ensuring the safe reintroduction of the particles flow into the cracking reactor R1.

The flue gas that exits from the gas-solid separator A5 is sent to a heat exchanger E1 that allows for the transferring of the heat from the flue gas stream to the oxidant stream used in the reactor R2, by using the heat exchanger E5 (heat exchangers E1 and E5 may be structurally united).

The final process is realized on the flue gas with the aim to minimize (until zero) the emission in the atmosphere of any kind of pollutant: the flue gas flow undergoes, in fact, water condensation (to preserve subsequent membranes and/or filters), powder removal and carbon dioxide (CO₂) sequestration. To this end, a powder or particle separator E2 and/or a dryer and CO₂ sequestration unit E3 may be present at the end of the flue gas stream. The remaining flue gas is basically the over-stoichiometric oxygen (and nitrogen) that can be re-used in the process or released with no negative effect on the atmosphere. This approach is definitively a "zero-emission" approach.

The impurities (see below) accumulating in the loop having a mean size less than 1 mm are transported away from the riser and separated by the gas-particles separator to be finally collected at a filter unit in the flue gas line. The heavy / larger impurities remains in the combustion reactor and are extracted from the bottom or from a loop seal periodically. Their presence does not create any problem to the process, but they have to be extracted from time to time or periodically and, e.g., disposed off in a landfill.

### III. Description of the cracking reactor

The hydrodynamics of the cracking reactor R1 shown in FIG. 2 can be described as a moving bed self-fluidized by the vapors produced by the cracking & reactions of the polymer chains that move counter-currently with the bed itself.

The plastic is fed in the molten state from the top of the reactor via plastic melt flow inlet 1 and a distributor 2 designed in such a way to uniformly distribute the flow along the transversal section of the reactor. Below the inlet section of plastic flow, a flow of particles having a given enthalpy and a given mass rate is fed via one or more taps constituting particles flow inlet(s) 3. The injected particles flow co-currently with (i.e. in the same direction as) the plastic flow, namely from "top to bottom". The position of the particles flow inlet(s) 3 as well as the number and distribution of these inlets depends on the reactor size; anyway the position of particles flow inlet(s) 3 or entrance is preferably always above the target level 5 of bed of particles in the cracking reactor R1 and below the plastic flow distributor 2. The number and the type of particles inlets depends by the wideness of the reactor R1 transversal section because it is necessary ensuring the uniformity of distribution; in case of large reactor having diameter larger than 800 mm a series of vertical standpipes will preferably be installed through the plastic distributor until the top of the reactor where a plenum fed by particles is present; in this case the particles reintroduction will be made from the top above the distributor itself (this alternative solution is not represented in FIG. 2).

In general, as indicated in FIG. 2 the reactor vessel of the cracking reactor R1 has a bottom section S1 with a bottom B, a middle section S2, and an upper section S3 with a top T. The bottom section S1 is where particles and solid pyrolysis products (in particular char) accumulate before being extracted via the particles and solid pyrolysis products outlet 9 and being transported to the combustion reactor R2 via a first connection line comprising the non-mechanical valve A3. The middle section S2 is meant to designate a section above the bottom section S1 up to above the bed level 5 that dynamically or quasi-statically sets or is established during operation but generally below the various inlets 1, 3, 4. Hence, the middle section S2 designates the primary reaction zone where the bed of particles is located during operation. The upper section S3 is the section above the middle section S2 which reaches until the top T and comprises the plastic melt flow inlet 1, the particle flow inlet 3, and the gaseous pyrolysis products outlet 4.

The particles introduced in the cracking reactor R1 accumulate by forming a bed having the following hydrodynamic characteristics:
a) its bed level 5 is kept constant;
b) it is in dynamic state (moving bed) due to the continuous injection (at particle flow inlet 3) of hot particles and continuous extraction (at particles and solid products outlet 9) of colder particles;
c) the bed surface is hit by the molten plastic streams distributed via distributor 2 from the top of reactor;
d) the mixing of hot particles and plastic streams promotes fast cracking and chemical reactions;
e) the flow of particles extracted by the bottom contains solid byproducts of cracking reaction of plastic material and the unconverted material other than the impurities such as glass, ceramic, metals, ...

The gaseous products of the reactions are removed from one or more taps (i.e. gaseous products outlet 4) at an upper region or the top of the reactor and send to the fractionation system E6.

The flow of particles is extracted from the cracking reactor R1 when / where its temperature is so low to be unable to promote endothermic reactions of plastic material. The determination of temperature profile along the cracking reactor R1 (i.e. temperature versus axial position or "height") is the main design parameter and its measurement is an operating parameter measured by means of taps for temperature measurement, whose number and location in FIG. 2 are merely exemplary. The height of the bed (i.e. bed level 5) where the reactions take place is then determined by the temperature profile and the ratio between this height and the moving bed velocity determines the residence time.

The residence time of the particles depends on the moving bed downward velocity: this is controlled by the non-mechanical valves A3 and A7.

The reactor temperature depends on the enthalpy of the particle flow: this is controlled by the loop regeneration and temperature control system (R2+A4+A5+A6 and A7 in FIG. 1).

The easy control of residence time and reaction temperature allows the use of the same reactor for different plastic materials and different reaction kinetics.

### List of reference symbols

A1: plastic melting device
A2: heating device
A3: non-mechanical valve
A4: gas/solid transportation riser
A5: gas-solid separator
A6: particles buffer
A7: non-mechanical valve
R1: cracking reactor
E1: heat exchanger (flue gas cooler)
E2: powder or particle separator
E3: dryer and CO2 sequestration unit
E4: oxygen enrichment or production unit
E5: heat exchanger (oxidant heater)
E6: fractionation system
E7: electricity production unit
R1: cracking reactor
R2: combustion reactor (regenerator)
R2-a: particles and solid pyrolysis products inlet
R2-b: oxidant inlet
R2-c: particles and combustion products outlet

### CENTER ARROWS: particles' flow pathway LEFT-HAND ARROWs: plastic to products pathway

1: plastic melt flow inlet
2: distributor for plastic uniform injection
3: particles flow inlet
4: gaseous pyrolysis products outlet
5: bed level
6: tap for temperature measurement
7: tap for pressure measurement
8: tap for nitrogen injection
9: particles and solid pyrolysis products outlet
10: reactor vessel
S1: bottom section
S2: middle section
S3: upper section
B: bottom
T: top

## Claims

1. A plant for converting plastics into petrochemical products, comprising a cracking reactor (R1) for a pyrolysis reaction, wherein the plastics is converted into at least gasified pyrolysis products and solid pyrolysis products, and further comprising a separate combustion reactor (R2),
the cracking reactor (R1) comprising an upright standing reactor vessel (10) with a bottom section (S1), a middle section (S2), and an upper section (S3), the reactor vessel (10) further comprising a plastic melt flow inlet (1), a particles flow inlet (3), a gaseous pyrolysis products outlet (4) discharging from the upper section (S3), and a particles and solid pyrolysis products outlet (9) discharging from the bottom section (S1),
the combustion reactor (R2) comprising a particles and solid pyrolysis products inlet (R2-a), an oxidant inlet (R2-b), and a particles and combustion products outlet (R2-c),
the particles and solid pyrolysis products outlet (9) of the cracking reactor (R1) being connected via a first connection line to the particles and solid pyrolysis products inlet (R2-a) of the combustion reactor (R2), and the particles and combustion products outlet (R2-c) of the combustion reactor (R2) being connected via a second connection line to the particles flow inlet (3) of the cracking reactor (R1),
such that the cracking reactor (R1) and the combustion reactor (R2) are part of a particles loop which contains a multitude of solid particles, wherein during operation the particles are cycled from the cracking reactor (R1) to the combustion reactor (R2) and back,
**characterized in that** the plastic melt flow inlet (1) is arranged in the upper section (S3) of the cracking reactor (R1), designed to inject a plastic melt flow predominantly in top-to-bottom direction.

2. The plant according to claim 1, wherein the plastic melt flow inlet (1) is arranged at the top, in particular as a top lid, of the reactor vessel (10).

3. The plant according to claim 1 or 2, wherein within the plastic melt flow inlet (1) or below there is a plastic melt flow distributor (2), designed to uniformly distribute the injected plastic melt flow with respect to a cross section of the reactor vessel (10).

4. The plant according to any one of the preceding claims, wherein the particles flow inlet (3) is arranged in the upper section (S3) of the cracking reactor (R1), designed to inject a particles flow in top-to-bottom direction.

5. The plant according to any one of the preceding claims, wherein the particles flow inlet (3) is arranged in a side wall of the reactor vessel (10), below the plastic melt flow inlet (1).

6. The plant according to any one of the preceding claims, wherein the gaseous pyrolysis products outlet (4) is arranged in a side wall of the reactor vessel (10), below the plastic melt flow inlet (1) and preferably below the particles flow inlet (3).

7. The plant according to any one of the preceding claims, wherein the first connection line comprises a non-mechanical valve (A3) which is designed to control a flow of particles and solid pyrolysis products from the cacking reactor (R1) to the combustion reactor (R2) via an adjustable flow of aeration gas.

8. The plant according to any one of the preceding claims, wherein the second connection line comprises, in that order along the flow direction of the particles, a gas/particles transportation riser (A4), a gas-particles separator (A5) ejecting flue gas from the particles loop, a particles buffer (A6), and a non-mechanical valve (A7).

9. The plant according to claim 8, wherein the non-mechanical valve (A7) in the second connection line is designed to control a flow of particles into the cracking reactor (R1) via an adjustable flow of aeration gas.

10. The plant according to claim 8 or 9, wherein the particles buffer (A6) comprises a fluidized bed heat exchanger, designed for controllable cooling of buffered particles via an adjustable flow of fluidization gas and/or a separate cooling gas.

11. The plant according to any one of claims 8 to 10, wherein the transportation riser (A4) comprises a column which is arranged above the combustion reactor (R2).

12. The plant according to any one of the preceding claims, comprising an oxidant line with an oxygen enrichment or production unit (E4) leading to the oxidant inlet (R2-b), wherein the oxygen enrichment or production unit (E4) is designed to increase an oxygen level and/or to decrease a nitrogen level of drawn-in air.

13. A method of operating the plant according to any one of the preceding claims, wherein a plastic melt flow is injected into the reactor vessel (10) via the plastic melt flow inlet (1) predominantly in top-to bottom direction.

14. The method according to claim 13, wherein a flow of particles is injected into the reactor vessel (10) via the particles flow inlet (3) predominantly in top-to bottom direction, concurrently with the plastic melt flow.

15. The method according to claim 13 or 14, wherein a flow of gaseous pyrolysis products in bottom-to-top direction through the reactor vessel (10) is established by a negative pressure applied to the gaseous pyrolysis products outlet (4), in particular via a fractionation system (E6) connected to said gaseous pyrolysis products (4) outlet.

16. The method according to any one of claims 13 to 15, wherein a fluidized bed of downwardly moving particles is maintained within the reactor vessel (10).

17. The method according to claim 16, wherein the bed of particles within the reactor vessel is kept at a constant level (5) by setting the average inflow rate of particles into and the outflow rate of particles from the reactor vessel (10) at the same value.
